# EUROPÄISCHE PATENTSCHRIFT

(11) **EP 2 193 984 B1**
(45) Veröffentlichungstag und Bekanntmachung des Hinweises auf die Patenterteilung: **17.04.2013**
(21) Anmeldenummer: 09008590.3
(22) Anmeldetag: 01.07.2009
(51) Int. Cl.: B62D 35/02

(54) **Fahrzeug mit einer Vorrichtung zur konvektiven Kühlung einer Antriebsstrang-Komponente eines Kraftfahrzeuges**
Vehicle with a device for convective cooling of a power transmission component of a motor vehicle
Véhicule avec un dispositif de refroidissement convectif d'un composant de transmission d'un véhicule automobile

(30) Priorität: 03.12.2008 DE 102008061540
(43) Veröffentlichungstag der Anmeldung: 09.06.2010
(73) Patentinhaber: Dr. Ing. h.c. F. Porsche AG, 70435 Stuttgart (DE)
(72) Erfinder: Maier, Holger, 70176 Stuttgart (DE); Meier, Robert, 76199 Karlsruhe (DE); Gürtler, Tom, 71254 Ditzingen (DE); Magistro, Gianluca, 71272 Renningen (DE)

(56) Entgegenhaltungen:
- EP-A1- 1 520 771
- EP-A2- 0 888 957
- DE-A1- 4 319 281
- JP-A- 10 110 812

## Beschreibung

Die Erfindung betrifft ein Fahrzeug mit einer Vorrichtung zur konvektiven Kühlung einer Antriebsstrang-Komponente eines Kraftfahrzeuges, wobei die Antriebsstrang-Komponente im Bereich des Unterbodens des Fahrzeuges angeordnet ist und die Vorrichtung beim fahrenden Fahrzeug eine Unterboden-Luftströmung zur Antriebsstrang-Komponente lenkt.

Zur Einhaltung von Grenztemperaturen von fahrzeugseitigen Aggregaten, insbesondere Antriebsstrang-Komponenten ist es allgemein bekannt, diese im Fahrbetrieb mittels einer mit einem Luftstrom zusammenwirkenden Vorrichtung zu belüften.

Eine Vorrichtung der eingangs genannten Art ist aus der DE 43 19 281 A1 bekannt. Zur Kühlung einer als Hinterachsdifferential ausgebildeten Antriebsstrang-Komponente ist ein plattenförmiges Verkleidungsteil der Unterbodenverkleidung vorgesehen, das mit Leitblechen versehen ist. Dabei ist das Verkleidungsteil im Bereich der Leitbleche mit Einlässen versehen, durch die vorbeiströmende Luft abgesaugt wird, so dass diese Luft in einen Bereich zwischen der Verkleidungsplatte und dem Fahrzeugboden und überdies zum Hinterachsdifferential gelangen kann.

In der EP 0 888 957 A2 ist ein Belüftungsblech beschrieben, das stromaufwärts des Hinterachsgetriebes positioniert ist. Zwischen dem als Strömungskörper ausgebildeten Belüftungsblech und einem in Strömungsrichtung hinter der Unterbodenverkleidung des Fahrzeuges angeordneten Leitblech wird Kühlluft zu dem zu kühlenden Aggregat des Fahrzeugs geleitet, bei dem es sich um ein Differentialgetriebe handelt.

Die Vorrichtungen gemäß dem vorstehend erörterten Stand der Technik ermöglichen zwar eine gerichtete Umlenkung der Unterboden-Luftströmung zur Antriebsstrang-Komponente, insbesondere dem Hinterachsdifferential, stellen aber keine gezielte Führung der Unterboden-Luftströmung um die Antriebsstrang-Komponente sicher. Dies führt zu einer unzureichenden konvektiven Kühlung der Antriebsstrang-Komponente.

In der JP 10110812 A ist ein Fahrzeug beschrieben, bei dem in Fahrtrichtung hinter einem Hinterachsdifferential zwischen diesem und einem Ersatzrad eine als Platte ausgebildete Vorrichtung zur konvektiven Kühlung des Hinterachsdifferentials angeordnet ist. Die Platte ist senkrecht zum Unterboden, quer zur Fahrtrichtung angeordnet und im Bereich ihres oberen Endes mit dem Unterboden verbunden. Durch die Platte wird die Unterboden-Luftströmung vor der Platte gestaut und um diese gelenkt. Hierbei wird die Unterboden-Luftströmung auch um das Hinterachsdifferential gelenkt, womit dieses konvektiv gekühlt wird. Bei dieser Vorrichtung ist insbesondere von Nachteil, dass die Unterboden-Luftströmung vor der senkrecht zum Unterboden angeordneten Platte gestaut und damit eine unkontrollierte Umströmung des Hinterachsdifferentials stattfindet, mit der Folge turbulenter Strömungen, die aerodynamisch ungünstig sind.

Weitere Vorrichtungen zur Kühlung einer Antriebsstrang-Komponente eines Fahrzeuges sind aus der DE 103 45 328 A1, DE 103 08 084 A2 und DE 44 29 924 B4 bekannt.

Aufgabe der vorliegenden Erfindung ist es, ein Fahrzeug mit einer Vorrichtung der eingangs genannten Art so weiterzubilden, dass ein großer Volumenstrom Luft von dem Unterboden des Fahrzeugs zur Antriebsstrang-Komponente gelenkt wird, somit diese Komponente besonders gut konvektiv gekühlt wird.

Gelöst wird die Aufgabe dadurch, dass das zweite, direkt an der Antriebsstrang-Komponente befestige Umlenkelement die Unterboden-Luftströmung um die Antriebsstrang-Komponente umlenkt.

Bei der erfindungsgemäßen Vorrichtung kommt dem ersten Umlenkelement die Aufgabe zu, die Strömungsrichtung der Unterboden-Luftströmung, ausgehend vom Unterboden, in geringfügigem Maße umzulenken, nach oben zum zweiten Umlenkelement hin. Das zweite Umlenkelement, das im Bereich der Antriebsstrang-Komponente angeordnet ist und dieses teilweise umschließt, hat die Aufgabe, die Luftströmung stärker abzulenken, dahingehend, dass die Luftströmung um die Antriebsstrang-Komponente umgelenkt wird. Bei der Antriebsstrang-Komponente handelt es sich vorzugsweise um ein Getriebeteil des Kraftfahrzeugs, insbesondere um ein Hinterachsdifferential.

Die Ausbildung der Vorrichtung in Art zweier separater Umlenkelemente ermöglicht jedes Umlenkelement unter dem Aspekt der an diese gestellten Strömungsbedingungen optimal zu gestalten. Überdies ist es aufgrund der beiden separaten Umlenkelemente möglich, diese an besonders geeigneten Orten des Fahrzeugs anzubringen. Bei dem zweiten Umlenkelement ist dies die Antriebsstrang-Komponente, mit der das zweite Umlenkelement befestigt ist. Bezüglich des ersten Umlenkelementes wird es als besonders vorteilhaft angesehen, wenn dieses in einem Abgasrohr oder den Abgasrohren der Abgasanlage des Kraftfahrzeuges gelagert ist, insbesondere mit dem Abgasrohr bzw. den Abgasrohren befestigt ist. Durch die genannte Lagerung von erstem und zweitem Umlenkelement sind die Umlenkelemente geringfügig zueinander beweglich.

Baulich besonders einfach sind die beiden Umlenkelemente gestaltet, wenn sie als Umlenkbleche ausgebildet sind. Durch Verwendung von Blechen können auf einfache Art und Weise optimale Formgestaltungen der Umlenkelemente erreicht werden.

Um eine optimale Zuführung der Unterboden-Luftströmung mittels des ersten Umlenkelements zum zweiten Umlenkelement zu erzielen und die umgelenkte Luftströmung um die Antriebsstrang-Komponente zu lenken, sind das erste Umlenkelement und/oder das zweite Umlenkelement vorzugsweise als Strömungskörper, insbesondere als dünnwandige Formkörper ausgebildet. Insbesondere bei der Gestaltung des ersten Umlenkelements ist dies von großer Bedeutung, da die Luftströmung, ausgehend vom Unterboden entlang der Unterseite des ersten Umlenkelements strömt und unter dem Aspekt der Strömungsoptimierung anzustreben ist, dass sich entlang des ersten Umlenkelements eine laminare Strömung einstellt.

Unter dem Aspekt der Strömungsoptimierung im Bereich des ersten Umlenkelements wird es als besonders vorteilhaft angesehen, wenn der das erste Umlenkelement bildende Körper V-förmig gestaltet ist, mit einer bezüglich der Unterboden-Luftströmung stromaufwärtigen Basis und sich an diese stromabwärts anschließenden Schenkeln. Von der Unterbodenverkleidung des Fahrzeugs wird die Luftströmung zur Basis des ersten Umlenkelements geleitet und von der Basis zu den Schenkeln, die hervorragend geeignet sind, die laminare Umlenkung der Strömung zum zweiten Umlenkelement hin zu bewirken. So ist vorzugsweise die Basis im Wesentlichen eben gestaltet und setzt sich in die jeweils geneigt angeordneten Schenkel fort. Von besonderem Vorteil ist es, wenn der jeweilige Schenkel, ausgehend von der Basis, verdrillt ausgebildet ist, wobei die aufeinander zugerichteten Seiten der beiden Schenkel nach oben gerichtet sind. Damit wird zwischen den beiden Schenkeln die Luftströmung geführt, wobei die beiden Schenkel aufgrund deren verdrillten Gestaltung die Luftströmung seitlich mit einer Komponente nach oben führen. Die Verdrehung des jeweiligen Schenkels beträgt, ausgehend von der Basis, insbesondere weniger als 60°.

Durch die genannte Gestaltung des ersten Umlenkelements kann eine laminare Luftströmung dem zweiten Umlenkelement zugeführt werden. Die Zuführung erfolgt insbesondere in einen Zwischenraum bzw. Spalt zwischen der Antriebsstrang-Komponente und dem zweiten Umlenkelement. Der Zwischenraum ist vorzugsweise durch einen schalenartigen Bereich des zweiten Umlenkelements und einem nach außen gewölbten Gehäuseteil der Antriebsstrang-Komponente gebildet. Durch diesen Zwischenraum strömt die Luft und bewirkt aufgrund der schalenartigen Gestaltung des zweiten Umlenkelements und in Folge der nachhaltigen Umlenkung der Luftströmung eine besonders gute konvektive Kühlung der Antriebsstrang-Komponente, insbesondere des Hinterachsdifferentials.

Vorzugsweise sind das erste Umlenkelement und das zweite Umlenkelement in Strömungsrichtung der Unterboden-Luftströmung in geringem Abstand hintereinander angeordnet. Hierdurch wird die Luft zwangsweise in den Zwischenraum zwischen der Antriebsstrang-Komponente und dem zweiten Umlenkelement geführt. Das erste Umlenkelement und die bezüglich diesem stromaufwärtige Unterbodenverkleidung sind vorzugsweise in Strömungsrichtung der Unterboden-Luftströmung unmittelbar hintereinander angeordnet. Hierdurch ist sichergestellt, dass stromabwärts der Unterbodenverkleidung keine relevanten Turbulenzen entstehen, womit eine laminare Anströmung des ersten Umlenkelements gewährleistet ist.

Weitere Merkmale der Erfindung ergeben sich aus den Unteransprüchen, der nachfolgenden Beschreibung der Zeichnung und der Zeichnung selbst.

Ein bevorzugtes Ausführungsbeispiel der Erfindung ist in der Zeichnung erläutert und in der nachfolgenden Beschreibung näher beschrieben. Es zeigt:

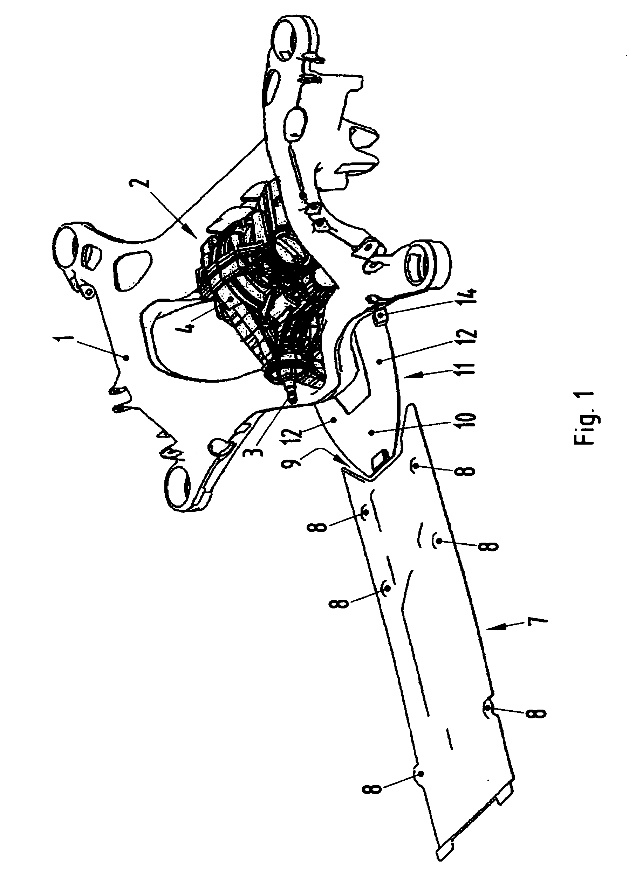

- Fig. 1: eine räumliche Ansicht eines in einem Fahrschemel eines Personenkraftwagens gelagerten Hinterachsdifferentials, die erfindungsgemäße Vorrichtung zur konvektiven Kühlung der als Hinterachsdifferential ausgebildeten Antriebsstrang-Komponente sowie eine in Strömungsrichtung der Unterboden-Luftströmung vor der Vorrichtung angeordnete Fahrzeugunterbodenverkleidung,

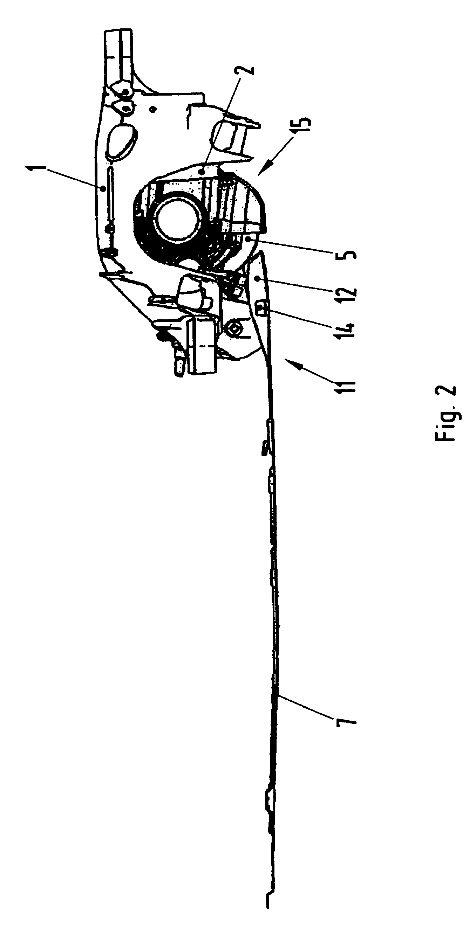

- Fig. 2: eine Seitenansicht der in Fig. 1 gezeigten Anordnung,

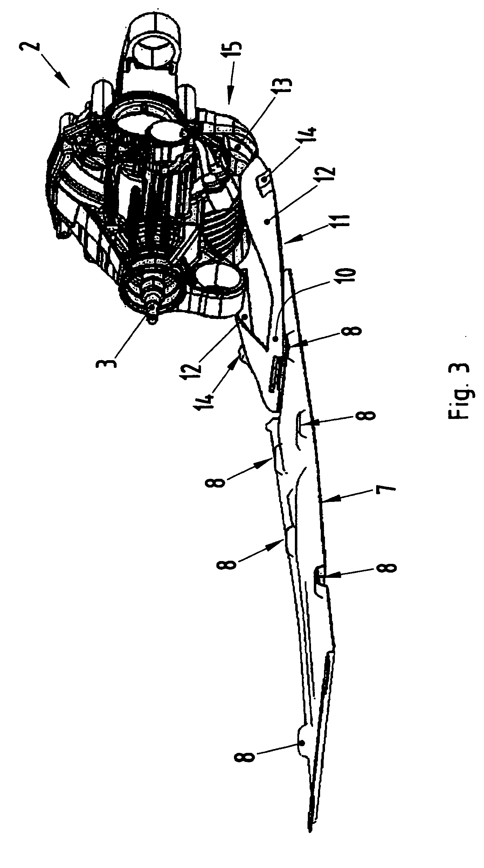

- Fig. 3: eine räumliche Ansicht der in Fig. 1 und 2 veranschaulichten Anordnung, allerdings ohne Fahrschemel,

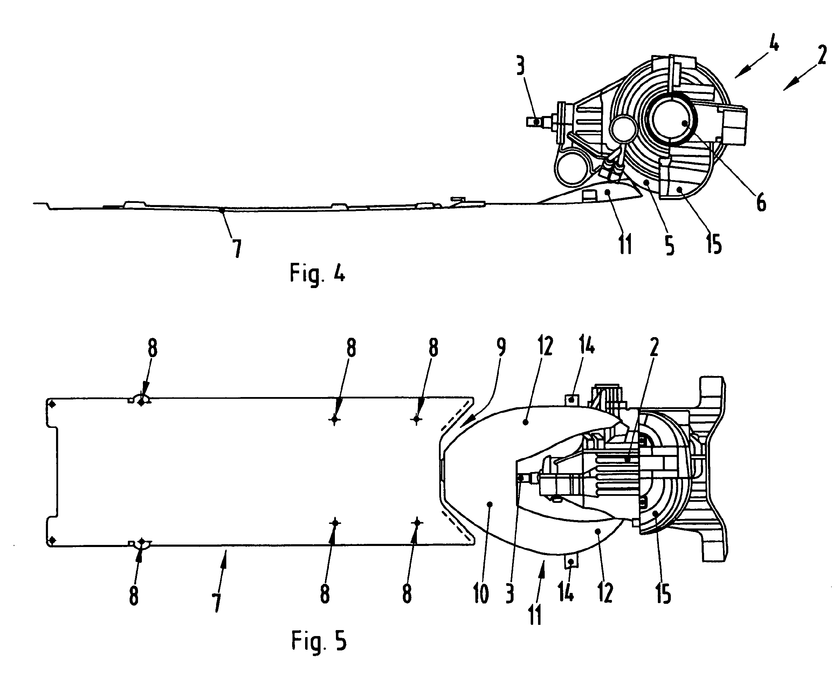

- Fig. 4: eine Seitenansicht der in Fig. 3 gezeigten Anordnung,
- Fig. 5: eine Unteransicht der in den Fig. 3 und 4 gezeigten Anordnung.

In einem Fahrschemel 1 ist ein Hinterachsdifferential 2 gelagert. Veranschaulicht ist zum Hinterachsdifferential 2 dessen, bezogen auf die Orientierung des Personenkraftwagens, nach vorne gerichtete Getriebeeingangswelle 3. Das Gehäuse 4 des Hinterachsdifferentials 2 weist, bezogen auf die Orientierung des Personenkraftwagens, unten ein nach außen gewölbtes Gehäuseteil 5 auf. Mit der Bezugsziffer 6 sind seitlich des Hinterachsdifferentials 2 angeordnete Lager zur Aufnahme von Hinterräder des Personenkraftwagens antreibenden Antriebsachsen bezeichnet.

Der Unterboden des Personenkraftwagens ist verkleidet, wobei nur die im Bereich der Mittellängsachse des Fahrzeugs angeordnete Unterbodenverkleidung 7 in demjenigen Bereich, der dem Fahrschemel 1 benachbart und vor diesem angeordnet ist, veranschaulicht ist. Die Unterbodenverkleidung 7 ist im Wesentlichen rechteckig gestaltet und als Platte ausgeführt, beispielsweise als Blechplatte. Sie ist mit diversen Aufnahmen 8, die der Befestigung der Unterbodenverkleidung 7 am Unterboden des Fahrzeugs dienen, versehen. Im hinteren Stirnbereich weist die Unterbodenverkleidung 7 eine Einbuchtung 9 auf. In diese Einbuchtung ragt eine Basis 10 eines V-förmig gestalteten ersten Umlenkelements 11. Diese Basis 10 ist in geringem Abstand zur Unterbodenverkleidung 7 angeordnet. An die Basis des V-förmig gestalteten Umlenkelements 11 schließen sich zwei Schenkel 12 an, die unterhalb des Fahrschemels 1 angeordnet sind und mit ihren freien Enden bis nahezu zum Gehäuseteil 5 des Hinterachsdifferentials 2 ragen. Während die Basis 10 im Wesentlichen eben gestaltet ist, sind die sich an diese anschließenden Schenkel 12 jeweils geneigt angeordnet. Der jeweilige Schenkel 12 ist ausgehend von der Basis 10 verdrillt ausgebildet, um einen Winkel von etwa 45°, ausgehend von der Plattenebene der Basis 10. Die aufeinander zugerichteten Seiten der beiden Schenkel 12 sind hierbei nach oben gerichtet. Das erste Umlenkelement 11 ist symmetrisch zu seiner Längsachse ausgebildet. Befestigt wird das Umlenkelement 11 im Bereich seiner beiden Schenkel 12 mittels außen an den Schenkeln 12 angebrachter Befestigungsaufnahmen 14, die mit beidseitig des Hinterachsdifferentials 2 vorbeigeführten, nicht gezeigten Abgasrohren der Abgasanlage des Personenkraftwagens verbunden werden.

Hinter dem ersten Umlenkelement 11 ist ein zweites Umlenkelement 15, das genauso wie das erste Umlenkelement ein separates Bauteil darstellt, angeordnet. Dieses ist, genauso wie das erste Umlenkelement 11, als Blech ausgebildet. Das zweite Umlenkelement 15 ist in geringem Abstand zu den freien Enden der Schenkel 12 des ersten Umlenkelements 11 angeordnet. Das zweite Umlenkelement 15 ist in Art einer Schale ausgebildet, die zwischen sich und dem nach außen gewölbten Gehäuseteil 5 einen Zwischenraum 13 in Art eines Spaltes zum Durchströmen von Luft bildet. Das schalenförmige zweite Umlenkelement 15 ist seitlich, unterhalb und in Strömungsrichtung hinter dem Gehäuseteil 5 angeordnet, so dass Luft vom Umlenkelement 15 mittels diesem um das Gehäuseteil 5 gelenkt wird.

Das Umlenkelement 15 ist mittels nicht gezeigter Schrauben mit dem Gehäuse 4 des Hinterachsdifferentials 2 verbunden.

Bei dem ersten Umlenkelement 11 und dem zweiten Umlenkelement 15 handelt es sich somit um Strömungskörper, die als dünnwandige Formkörper ausgebildet sind. Die Gestaltung des ersten Umlenkelements 11 mit der Basis 10 und den Schenkeln 12, die verdrillt sind, bewirkt, dass die Unterboden-Luftströmung laminar entlang des ersten Umlenkelements 11 in den Zwischenraum 13 zwischen dem Hinterachsdifferenfial 2 und dem zweiten Umlenkelement 15 gelenkt wird. Mittels des zweiten Umlenkelements 15 wird die Luft um das Gehäuse 4 des Hinterachsdifferentials 2 gelenkt. Auf diese Art und Weise wird ein großer Luft-Volumenstrom der Unterboden-Luftströmung dem Hinterachsdifferential 2 zugeführt und bedingt eine optimale konvektive Kühlung des Hinterachsdifferentials 2.

### Bezugszeichenliste

- 1: Fahrschemel
- 2: Hinterachsdifferential
- 3: Getriebeeingangswelle
- 4: Gehäuse
- 5: Gehäuseteil
- 6: Lager
- 7: Unterbodenverkleidung
- 8: Aufnahme
- 9: Einbuchtung
- 10: Basis
- 11: erstes Umlenkelement
- 12: Schenkel
- 13: Zwischenraum
- 14: Befestigungsaufnahme
- 15: zweites Umlenkelement

## Patentansprüche

1. Fahrzeug mit einer Vorrichtung (11, 15) zur konvektiven Kühlung einer Antriebsstrang-Komponente (2) eines Kraftfahrzeuges, wobei die Antriebsstrang-Komponente (2) im Bereich des Unterbodens des Fahrzeuges angeordnet ist und die Vorrichtung (11, 15) beim fahrenden Fahrzeug eine Unterboden-Luftströmung zur Antriebsstrang-Komponente (2) lenkt, wobei die Vorrichtung (11, 15) ein erstes, separates Umlenkelement (11) und ein zweites, separates Umlenkelement (15) aufweist, wobei das erste Umlenkelement (11) die Unterboden-Luftströmung in Richtung des zweiten Umlenkelements (15) umlenkt, **dadurch gekennzeichnet, dass** das zweite, direkt an der Antriebsstrang-Komponente (2) befestigte Umlenkelement (15) die Unterboden-Luftströmung um die Antriebsstrang-Komponente (2) umlenkt.

2. Fahrzeug nach Anspruch 1, **dadurch gekennzeichnet, dass** die beiden Umlenkelemente (11, 15) als Umlenkbleche ausgebildet sind.

3. Fahrzeug nach Anspruch 1 oder 2, **dadurch gekennzeichnet, dass** das erste Umlenkelement (11) und/oder das zweite Umlenkelement (15) als Strömungskörper, insbesondere als dünnwandiger Formkörper ausgebildet sind.

4. Fahrzeug nach einem der Ansprüche 1 bis 3, **dadurch gekennzeichnet, dass** die Antriebsstrang-Komponente (2) ein Getriebeteil des Kraftfahrzeugs, insbesondere ein Hinterachsdifferential (2) ist.

5. Fahrzeug nach einem der Ansprüche 1 bis 4, **dadurch gekennzeichnet, dass** der das Umlenkelement (11) bildende Körper V-förmig gestaltet ist, mit einer bezüglich der Unterboden-Luftströmung stromaufwärtigen Basis (10) und sich an diese stromabwärts anschließenden Schenkeln (12, 12).

6. Fahrzeug nach Anspruch 5, **dadurch gekennzeichnet, dass** die Basis (10) im Wesentlichen eben gestaltet ist und sich an diese die jeweils geneigt angeordneten Schenkel (12, 12) anschließen.

7. Fahrzeug nach Anspruch 6, **dadurch gekennzeichnet, dass** der jeweilige Schenkel (12), ausgehend von der Basis (10), verdrillt ausgebildet ist, wobei die aufeinander zugerichteten Seiten der beiden Schenkel (12, 12) nach oben gerichtet sind.

8. Fahrzeug nach einem der Ansprüche 1 bis 7, **dadurch gekennzeichnet, dass** das erste Umlenkelement (11) derart gestaltet ist, dass die Unterboden-Luftströmung laminar entlang des ersten Umlenkelementes (11) in einen Zwischenraum (13) zwischen der Antriebsstrang-Komponente (2) und dem zweiten Umlenkelement (15) gelenkt wird.

9. Fahrzeug nach Anspruch 8, **dadurch gekennzeichnet, dass** der Zwischenraum (13) zwischen einem schalenartigen Bereich des zweiten Umlenkelements (15) und einem nach außen gewölbten Gehäuseteil (5) der Antriebsstrang-Komponente (2) gebildet ist.

10. Fahrzeug nach einem der Ansprüche 1 bis 9, **dadurch gekennzeichnet, dass** das erste Umlenkelement (11) in einem Abgasrohr oder den Abgasrohren einer Abgasanlage des Kraftfahrzeuges gelagert ist, insbesondere mit diesem/diesen befestigt ist.

11. Fahrzeug nach einem der Ansprüche 1 bis 10, **dadurch gekennzeichnet, dass** das erste Umlenkelement (11) und das zweite Umlenkelement (15) in Strömungsrichtung der Unterboden-Luftströmung hintereinander angeordnet sind, insbesondere unmittelbar oder in geringem Abstand zueinander angeordnet sind.

12. Fahrzeug nach einem der Ansprüche 1 bis 11, **dadurch gekennzeichnet, dass** das erste Umlenkelement (11) und die bezüglich diesem ersten Umlenkelement (11) stromaufwärtige Unterbodenverkleidung in Strömungsrichtung der Unterboden-Luftströmung unmittelbar hintereinander angeordnet sind.

## Claims

1. Vehicle with a device (11, 15) for convective cooling of a power transmission component (2) of a motor vehicle, wherein the power transmission component (2) is arranged in the region of the underbody of the vehicle and, when the vehicle is moving, the device (11, 15) directs an underbody air flow to the power transmission component (2), wherein the device (11, 15) has a first separate deflecting element (11) and a second separate deflecting element (15), wherein the first deflecting element (11) deflects the underbody air flow in the direction of the second deflecting element (15), **characterized in that** the second deflecting element (15) which is fastened directly to the power transmission component (2) deflects the underbody air flow around the power transmission component (2).

2. Vehicle according to Claim 1, **characterized in that** the two deflecting elements (11, 15) are in the form of baffles.

3. Vehicle according to Claim 1 or 2, **characterized in that** the first deflecting element (11) and/or the second deflecting element (15) are/is in the form of flow bodies, in particular in the form of thin-walled shaped bodies.

4. Vehicle according to one of Claims 1 to 3, **characterized in that** the power transmission component (2) is a gearing part of the motor vehicle, in particular a rear axle differential (2).

5. Vehicle according to one of Claims 1 to 4, **characterized in that** the body forming the deflecting element (11) is configured in a V-shaped manner, with a base (10) which is upstream with respect to the underbody air flow and limbs (12, 12) adjoining said base downstream.

6. Vehicle according to Claim 5, **characterized in that** the base (10) is configured to be substantially planar and the limbs (12, 12) which are each arranged in an inclined manner adjoin said base.

7. Vehicle according to Claim 6, **characterized in that** each limb (12), starting from the base (10), is formed in a twisted manner, wherein those sides of the two limbs (12, 12) which are directed towards each other are directed upwards.

8. Vehicle according to one of Claims 1 to 7, **characterized in that** the first deflecting element (11) is configured in such a manner that the underbody air flow is directed in a laminar manner along the first deflecting element (11) into an intermediate space (13) between the power transmission component (2) and the second deflecting element (15).

9. Vehicle according to Claim 8, **characterized in that** the intermediate space (13) is formed between a shell-like region of the second deflecting element (15) and an outwardly curved housing part (5) of the power transmission component (2).

10. Vehicle according to one of Claims 1 to 9, **characterized in that** the first deflecting element (11) is mounted in an exhaust pipe or in the exhaust pipes of an exhaust system of the motor vehicle, in particular is fastened to said exhaust pipe/exhaust pipes.

11. Vehicle according to one of Claims 1 to 10, **characterized in that** the first deflecting element (11) and the second deflecting element (15) are arranged one behind the other in the direction of flow of the underbody air flow, in particular are arranged directly or at a small distance with respect to each other.

12. Vehicle according to one of Claims 1 to 11, **characterized in that** the first deflecting element (11) and the underbody panel which is upstream with respect to said first deflecting element (11) are arranged directly one behind the other in the direction of flow of the underbody air flow.

## Revendications

1. Véhicule doté d'un dispositif (11, 15) de refroidissement convectif d'un composant de transmission (2) de véhicule automobile, le composant de transmission (2) étant disposé dans la région du dessous de caisse du véhicule et le dispositif (11, 15) dirigeant un flux d'air de dessous de caisse en direction du composant de transmission (2) lorsque le véhicule avance, le dispositif (11, 15) comportant un premier élément de déviation (11) séparé et un deuxième élément de déviation (15) séparé, le premier élément de déviation (11) déviant le flux d'air de dessous de caisse en direction du deuxième élément de déviation (15), **caractérisé en ce que** le deuxième élément de déviation (15) directement fixé au composant de transmission (2) dévie le flux d'air de dessous de caisse autour du composant de transmission (2).

2. Véhicule selon la revendication 1, **caractérisé en ce que** les deux éléments de déviation (11, 15) prennent la forme de tôles de déviation.

3. Véhicule selon la revendication 1 ou 2, **caractérisé en ce que** le premier élément de déviation (11) et/ou le deuxième élément de déviation (15) prennent la forme de corps d'écoulement, notamment de corps de forme à paroi mince.

4. Véhicule selon l'une quelconque des revendications 1 à 3, **caractérisé en ce que** le composant de transmission (2) est une partie de boîte de vitesses du véhicule automobile, notamment un différentiel d'essieu arrière (2).

5. Véhicule selon l'une quelconque des revendications 1 à 4, **caractérisé en ce que** le corps formant l'élément de déviation (11) prend une forme de V, avec une base (10) dirigée en amont du flux par rapport au flux d'air de dessous de caisse et des branches (12, 12) rattachées à elle dans la direction aval.

6. Véhicule selon la revendication 5, **caractérisé en ce que** la base (10) est pour l'essentiel verticale et que les branches (12, 12) disposées de façon respectivement inclinée sont rattachées à elle.

7. Véhicule selon la revendication 6, **caractérisé en ce que** la branche respective (12) est réalisée de façon torsadée en partant de la base (10), les côtés orientés l'un vers l'autre des deux branches (12, 12) étant orientés vers le haut.

8. Véhicule selon l'une quelconque des revendications 1 à 7, **caractérisé en ce que** le premier élément de déviation (11) est conçu de telle sorte que le flux d'air de dessous de caisse est articulé de façon laminaire le long du premier élément de déviation (11) dans un espace intermédiaire (13) prévu entre le composant de transmission (2) et le deuxième élément de déviation (15).

9. Véhicule selon la revendication 8, **caractérisé en ce que** l'espace intermédiaire (13) est formé entre une région de type enveloppe du deuxième élément de déviation (15) et une partie de boîtier (5) bombée vers l'extérieur du composant de transmission (2).

10. Véhicule selon l'une quelconque des revendications 1 à 9, **caractérisé en ce que** le premier élément de déviation (11) est disposé dans un tube de gaz d'échappement ou dans les tubes de gaz d'échappement d'une installation de gaz d'échappement du véhicule automobile, notamment fixé à lui ou à eux.

11. Véhicule selon l'une quelconque des revendications 1 à 10, **caractérisé en ce que** le premier élément de déviation (11) et le deuxième élément de déviation (15) sont disposés l'un derrière l'autre dans la direction d'écoulement du flux d'air de dessous de caisse, notamment directement l'un derrière l'autre ou à une certaine distance l'un de l'autre.

12. Véhicule selon l'une quelconque des revendications 1 à 11, **caractérisé en ce que** le premier élément de déviation (11) et le revêtement de dessous de caisse placé en amont par rapport audit premier élément de déviation (11) sont disposés l'un derrière l'autre dans la direction d'écoulement du flux d'air de dessous de caisse.
